(19) Europäisches Patentamt
European Patent Office
Office européen des brevets

(11) **EP 0 955 750 A2**

(12) **EUROPEAN PATENT APPLICATION**

(43) Date of publication:
**10.11.1999 Bulletin 1999/45**

(51) Int. Cl.$^6$: **H04L 25/02**

(21) Application number: **99201356.5**

(22) Date of filing: **01.05.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **05.05.1998 US 84264 P**

(71) Applicant:
**Texas Instruments Incorporated
Dallas, Texas 75251 (US)**

(72) Inventors:
• **Aberl, Peter**
**Kranzberg (DE)**
• **Teggatz, Ross E.**
**McKinney, Texas (US)**
• **Devore, Joseph A.**
**Richardson, Texas (US)**
• **Baldwin, David J.**
**Allen, Texas (US)**

(74) Representative: **Holt, Michael**
**Texas Instruments Ltd.,
PO Box 5069
Northampton, Northamptonshire NN4 7ZE (GB)**

(54) **Line driver with parallel driver stages**

(57)    A driver circuit includes: a first driver stage 92 having a first switch 70 coupled in series with a first resistor 60, the first switch 70 having a control node; a second driver stage 93 coupled in parallel with the first driver stage 92, the second driver stage 93 having a second switch 72 coupled in series with a second resistor 62, the second switch 72 having a control node; and a delay circuit 80 having an input coupled to the control node of the first switch 70 and an output coupled to the control node of the second switch 72.

Fig.2

EP 0 955 750 A2

Printed by Xerox (UK) Business Services
2.16.7/3.6

## Description

FIELD OF THE INVENTION

This invention generally relates to electronic systems and in particular it relates to line drivers with parallel driver stages.

BACKGROUND OF THE INVENTION

Controller Area Network (CAN) systems are being implemented as common networking systems for automotive applications and also in industrial applications. The CAN provides a two (or one) wire link which is terminated by 120 ohm loads at each end that can be routed around the entire vehicle. CAN provides a light weight and cost effective means for the central processing unit for a vehicle to communicate with satellite peripheral modules (i.e. dome lamps, door modules, head lamp modules, tail lamp modules, ABS modules, airbag modules, etc...). There are two types of systems used, low speed and high speed CAN. Low speed CAN is utilized for non-safety, low information modules like door units. Low speed CAN is operated with a baud rate in the 50 K baud range. High speed CAN is utilized for safety and high information modules like ABS. High speed CAN is operated with a baud rate in the 500 K baud to greater than 1 M baud range.

The primary limitation of high speed CAN is due to the REI noise generated by the quick switching required to operate at such high baud rates. The CAN wire itself is ISO specified for at least a 10 M length. This long wire provides an ideal antenna that can irradiate RFI noise within and outside of a vehicle. Existing high speed CAN transceivers have been developed by a number of IC companies but have not been able to minimize the RFI noise problem and maintain a high baud rate capability.

The typical prior art solution for dual wire drivers with differential output is a single driver approach with active feedback to control the slope of the output signal. The single driver approach requires active feedback in order to control the slope of the output signal. This prior art slope control mechanism has recognizable weaknesses in terms of common mode offset during transmission. The common mode offset is directly proportional to the radiated energy. The active feedback slope control also has the disadvantage of being susceptible to instability brought about by changes in output loading.

SUMMARY OF THE INVENTION

Generally, and in one form of the invention, the driver circuit includes: a first driver stage having a first switch coupled in series with a first resistor, the first switch having a control node; a second driver stage coupled in parallel with the first driver stage, the second driver stage having a second switch coupled in series with a second resistor, the second switch having a control node; and a delay circuit having an input coupled to the control node of the first switch and an output coupled to the control node of the second switch.

BRIEF DESCRIPTION OF THE DRAWINGS

In the drawings:

FIG. 1 is a schematic circuit diagram of a prior art driver circuit;
FIG. 2 is a schematic circuit diagram of a preferred embodiment driver circuit with parallel driver stages;
FIG. 3 is a waveform diagram with all of the output driver resistors having the same resistance value;
FIG. 4 is a waveform diagram with the output driver resistors having resistance values based on a negative exponential function;
FIG. 5 is a waveform diagram with the output driver resistors having resistance values that are duplicated in a mirrored manner.

DETAILED DESCRIPTION OF PREFERRED EMBODIMENTS

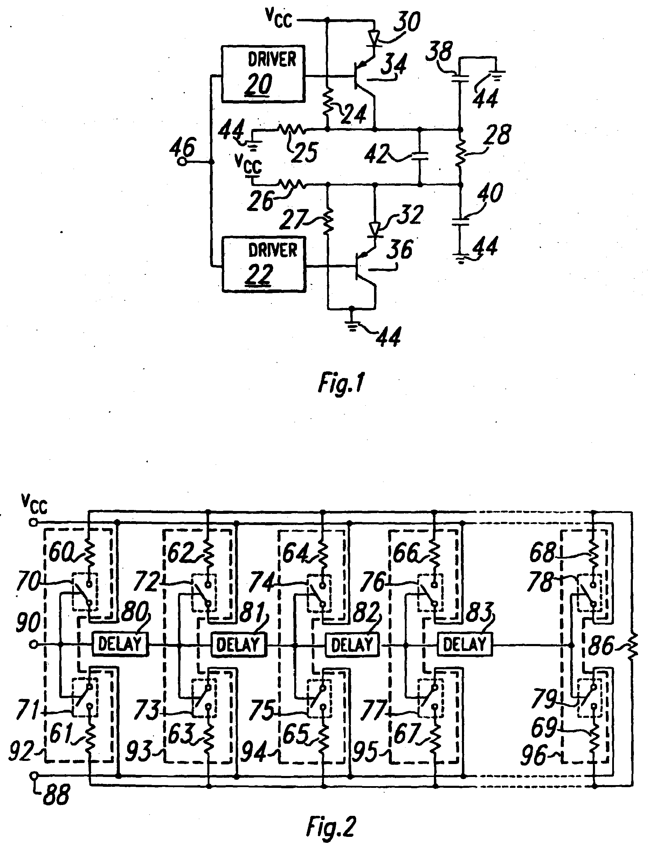

A prior art driver circuit is shown in Figure 1. The circuit of Figure 1 includes a CANH driver 20, a CANL driver 22, resistors 24-28, diodes 30 and 32, transistors 34 and 36, capacitors 38, 40, and 42, voltage source $V_{CC}$, ground 44, and enable/disable node 46. The CANH driver 20 uses a PNP transistor 36 (a PMOS transistor could also be used) as an active device. The CANL driver 22 uses a NPN transistor 36 (an NMOS could also be used) as an active device. Because these components are different, both CANL and CANH are driven from separate drive circuits 20 and 22. The time variation from switching from dominant to recessive and visa versa will cause significant common mode voltage shift to be seen. (The common mode voltage measurement is from the center tap point of resistor 28.) Minimization of the common-mode voltage shift directly correlates to the RFI noise observed. Also, imbalance of the impedance between CANH and CANL due to different components used for each structure causes a voltage imbalance on the CANH and CANL nodes which also introduces EMI noise problems.

A well controlled transceiver output circuit, as shown in Figure 2, has been developed which provides accurate Recessive (High Impedance) to Dominant (Low Impedance) and Dominant to Recessive switch matching between CANH and CANL pins. This transceiver also provides good differential voltage (differential voltage = CANH - CANL) accuracy compared to the prior art. In addition, this implementation is less sensitive to process and temperature variations. These are three simple, yet significantly distinguishable characteristics of this improved high speed CAN implementation which provides significant advantages over the prior art.

The preferred embodiment shown in Figure 2 includes output driver resistors 60-69, switches 70-79, delay circuits 80-83, termination resistor 86, voltage source $V_{CC}$, ground node 88, and enable/disable node (control node) 90. The switches 70-79 can be implemented, for example, with bipolar transistors or MOSFETs. The delay circuits 80-83 can be implemented with any conventional means. The circuit of Figure 2 shows the global functionality of cascaded driver stages and displays, as an example, a differential signal output for a dual wire network (e.g. CAN network, which is implemented in automotive and industry applications). The circuit of Figure 2 uses waveform shape modulation by switching banks of scaled resistor networks in time to achieve reduced radiated emissions in bus driver/receiver applications. Instead of using a single driver with a certain driver capability, the circuit of Figure 2 uses several small driver stages 92-96 joined together in parallel. The sum of the driver capability of all stages equals the driver strength of a corresponding single stage driver.

The parallel driver stages 92-96 are sequentially turned on or turned off respectively with a time delay dt between two adjacent driver stages. The time delay dt is provided by delay circuits 80-83. The enable signal, which turns on the driver stage, is passed through from stage 92 to stage 93, from stage 93 to stage 94, etc. The disable signal is passed through in the same direction, i.e. stage 92 is turned off first then stage 93 and so on. The defined shape of the slope during transition from one binary level to the other leads to a minimization of radiated energy (RFI) created in the bus wires of a single wire network as well as of a dual wire network (e.g. CAN network).

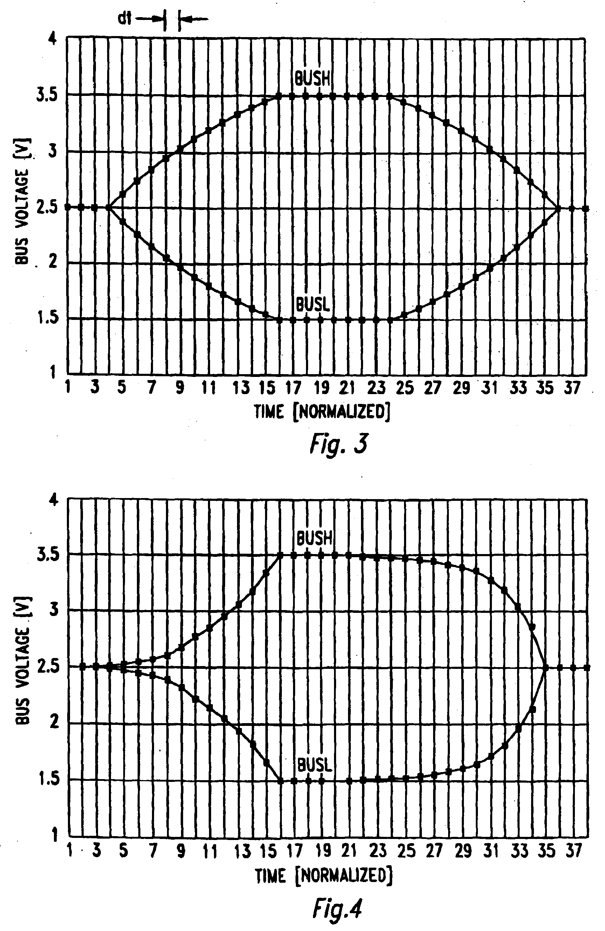

Each driver stage has its own output driver resistors which defines the driver capability of the corresponding driver stage. In Figure 3, a differential output signal with shaped slope and the output driver resistors 60-69 all having the same resistance value (e.g. resistors 60-69 are 540 ohm) and having 12 stage (only five stages 92-96 are shown in Figure 2) is shown. For the measurements shown in Figure 3, the supply voltage $V_{CC}$ is five volts and the termination resistor 86 is 60 ohm. The voltage levels at the y axis of the waveform are exemplary and are compliant to the high speed CAN standard ISO11898. The slopes of the signals BUSH and BUSL are already well shaped and from there are improving the RFI performance (decreasing radiated energy). However a drawback of this approach are the edges at the beginning and the end of each slope. Having a look into the frequency domain of such a signal would indicate high frequency harmonics because of the edges.

In order to substitute the edges by a smooth transition the output resistors 60-69 have to be rated with individual values. There are various mathematical methods applicable in order to get a well rounded waveform. As an example, Figure 4 shows the resulting signal waveforms based on a negative exponential function. The output resistance values are determined by the equation $R(x) = 3000^*exp(-.25x)$ where $x = 0, 1, 2, ... 11$. $R(0)$ corresponds to resistors 60 and 61, $R(1)$ corresponds to resistors 62 and 63, and so on. This approach results in a smooth transition from the static level to the slope, but a tough transition from the slope to the static level. Also, the trailing edge has a different shape than the rising edge which negatively impacts the timing behavior.

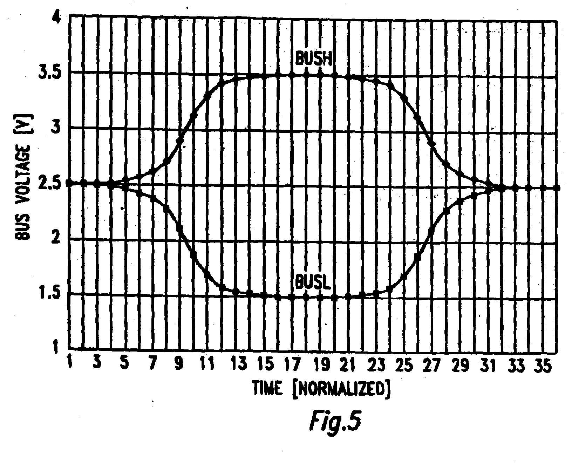

In order to have rounded edges at both ends and symmetrical slopes the resistor values are duplicated in a mirrored manner, i.e. the resistor value of the first driver stage is equal to the resistor value of the last driver stage, the resistor value of the second driver stage is equal to the resistor value of the next to last driver stage, etc. To keep the driver strength unchanged either each output resistor value has to be multiplied by a factor of 2, or, for a more convenient way, every second driver stage can be removed. The waveforms for this technique are shown in Figure 5 for a 12 stage driver. The output resistance values are determined by the equation $R(x) = 3000^*exp(-2^*.25x)$ for $x = 0$ to 5 and $R(x) = 3000^*exp(-2^*.25(11-x))$ for $x = 6$ to 11. $R_0$ corresponds to resistors 60 and 61, $R_1$ corresponds to resistors 62 and 63, and so on. The resulting waveform shows well rounded slopes and the trailing slope is the mirror image of the rising slope. Such a signal waveform would result in an optimized RFI performance and would minimize the radiated energy.

Several advantages are provided y the preferred embodiment. Every type of signal shape can be generated by adapting the rated resistor values. Radiated energy is minimized during transition from one logic level to the other. Feedback loop stability concerns are eliminated. The ability to control slope by digital delay is provided.

Although the present invention has been described in detail, it should be understood that various changes, substitutions and alterations can be made without departing from the spirit and scope of the invention as defined by the appended claims. It is therefore intended that the appended claims encompass any such modifications or embodiments.

## Claims

1. A driver circuit comprising:

    a first driver stage having a first switch coupled in series with a first resistor, the first switch having a control node;
    a second driver stage coupled in parallel with the first driver stage, the second driver stage having a second switch coupled in series with a second resistor, the second switch having a control node; and

a delay circuit having an input coupled to the control node of the first switch and an output coupled to the control node of the second switch.

2. The driver circuit of claim 1 further comprising at least one additional driver stage coupled in parallel with the second driver stage.

3. A dual wire line driver circuit comprising:

a first driver stage having a first switch coupled in series with a first resistor to connect a reference voltage to a high side output, and a second switch coupled in series with a second resistor to connect a second reference voltage to a low side output, the first and second switch having a control node; a second driver stage coupled in parallel with the first driver stage, the second driver stage having a third switch coupled in series with a third resistor to connect a reference voltage to the high side output, and a fourth switch coupled in series with a fourth resistor to connect the second reference voltage to the low side output, the third and fourth switch having a control node; and

a delay circuit having an input coupled to the control node of the first and second switch and an output coupled to the control node of the third and fourth switch.

4. The driver circuit of claim 3 further comprising at least one additional driver stage coupled in parallel with the second driver stage.

5. The driver circuit of claim 1 or 3 further comprising a plurality of additional driver stages coupled in parallel with the second driver stage.

6. The driver circuit of claim 5 wherein the resistor values of the parallel stages form a sequence of values in a manner to smooth the transition of the output voltage.

7. The driver circuit of claim 6, wherein the resistor values sequence is in a mirrored manner where the resistor values of the first stage is equal to the resistor value of the last stage and the resistor value of the second stage is equal to the resistor value of the second to the last stage.

Fig.1

Fig.2

Fig. 3

Fig.4

Fig.5